# EUROPEAN PATENT APPLICATION

(11) **EP 4 806 270 A1**
(43) Date of publication of application: **16.09.2026**
(21) Application number: 26162248.4
(22) Date of filing: 04.03.2026
(51) Int. Cl.: A21C 5/00

(54) **FEEDING SYSTEM FOR SUPPLYING DOUGH PORTIONS, IN PARTICULAR DOUGH FOR BAKERY FOOD PRODUCTS**

(30) Priority: 12.03.2025 IT 202500005066
(71) Applicant: SANCASSIANO S.p.A., I-12060 Roddi d'Alba (Cuneo) (IT)
(72) Inventor: DROCCO, Francesco, I-12060 Roddi (CN) (IT)
(74) Representative: Buzzi, Notaro & Antonielli d'Oulx S.p.A.

(57) **Abstract**

A feeding system (10) for supplying dough portions, in particular dough for bakery food products, is described.

The system comprises a hopper (20) and is characterized by the fact that, below the hopper (20), there are a first and a second roller (30, 40) in a particular configuration that allows for greater precision in controlling the quantity of dough dispensed.

## Description

### Field of the invention

The present invention relates to a feeding system for supplying dough portions, in particular dough for food products.

More particularly, the present invention relates to a feeding system of the type comprising:
- a hopper for receiving the dough;
- a sensor for measuring the total weight of the dough contained in the hopper;
- a first roller and a second roller, rotatable and opposed, which are arranged below a lower opening of the hopper and define between them a dispensing passage for dispensing the dough contained in the hopper;
- at least one actuator for actuating a rotation of said first and second rollers;
- a closure element for closing said dispensing passage, which is linearly movable between an open position and a closed position;
- a control unit for controlling said first and second rollers and said closure element based on an indication of a predefined quantity of dough to be dispensed and the weight detected by said sensor.

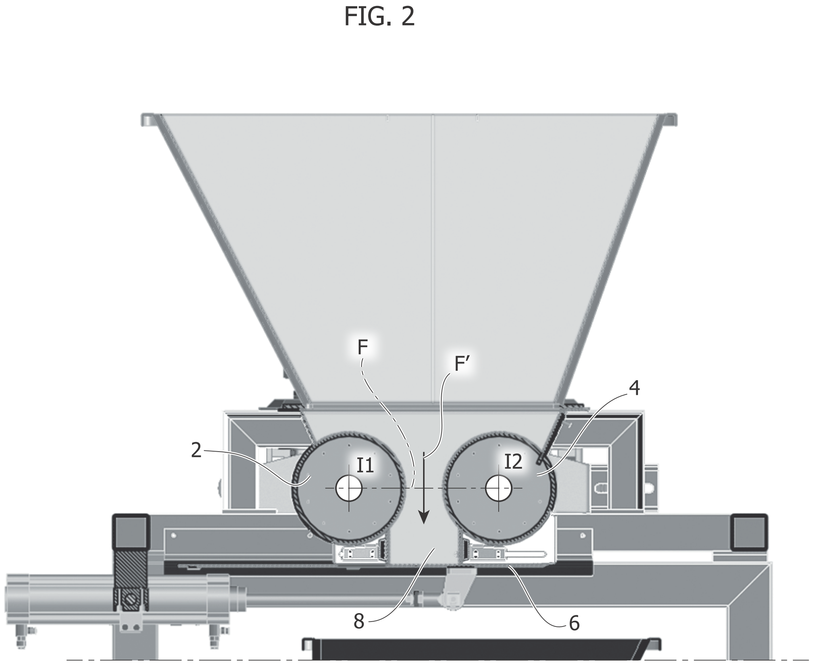

Figure 2 of the attached drawings illustrates a known system of the type indicated above. With reference to that figure, the known system in question comprises rotating rollers 2, 4, which have identical dimensions and are arranged so that their respective rotation axes I1, I2 are both contained in the same horizontal geometric plane P. The passage F defined between them extends along a vertical dispensing direction F'. A closure element 6 is provided to open and close an opening 8 located below the rollers 2, 4 and in communication with the passage F.

The feeding system illustrated above suffers from the disadvantage of offering low precision in controlling the quantity of dough dispensed, especially in applications where the dough to be dispensed has a high water content.

In this regard, the present invention aims to overcome the aforementioned disadvantage through a feeding system according to claim 1.

The present invention also relates to a feeding method according to claim 10.

The claims form an integral part of the teachings provided herein.

Further features and advantages of the present invention will become apparent from the following description with reference to the attached drawings, provided purely by way of non-limiting example, wherein:
- figure 1 represents a preferred embodiment of the system described herein;
- figure 2 represents a feeding system according to the prior art.

In the following description, various specific details are illustrated to provide a thorough understanding of the embodiments. The embodiments can be carried out without one or more of the specific details, or with other methods, components, or materials, etc. In other cases, known structures, materials, or operations are not shown or described in detail to avoid obscuring various aspects of the embodiment.

The references used herein are for convenience only and therefore do not define the scope of protection or the extent of the embodiments.

The feeding system described herein can be used for food doughs of any kind; for example, a possible application concerns the feeding of food doughs for bakery products, such as doughs for bread, brioches, and the like.

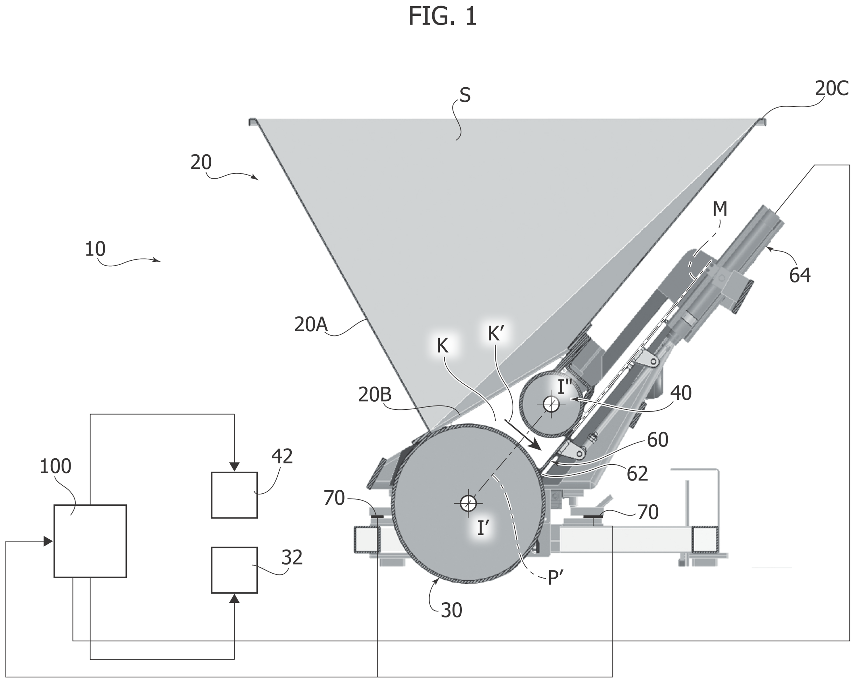

Referring to figure 1, the feeding system described herein - collectively indicated with reference number 10 - comprises a hopper 20 comprising a side wall 20A, preferably converging downwards, and a lower opening 20B. The side wall 20A terminates at the top with an upper edge 20C delimiting an upper opening through which the food dough can be loaded into the hopper.

The wall 20A delimits an internal space S for the reception of a food dough, in particular a dough for bakery products.

Immediately below the lower opening 20B, the feeding system 10 comprises a first rotatable roller 30 and a second rotatable roller 40 reciprocally opposed.

Preferably, the first roller 30 has a significantly larger diameter than the diameter of the second roller 40.

The first roller 30 is positioned so that its rotation axis I' is arranged vertically at a lower height compared to the rotation axis I'' of the second roller 40; in other words, the rotation axis I' of the first roller 30 is at a vertical distance from the upper edge 20C of the hopper 20 that is greater than the rotation axis I" of the second roller 40.

The two rotation axes I' and I'' both lie on the same geometric plane P' inclined with respect to a horizontal plane.

Between the first roller 30 and the second roller 40, a passage K for dispensing the dough contained in the hopper 20 is defined. The dispensing passage K extends along a dispensing direction K' inclined with respect to a vertical direction.

In one or more preferred embodiments, such as the one illustrated, the reciprocal arrangement of the two rollers 30, 40 is such that any vertical axis passing through the lower opening 20B of the hopper 20 is incident on either roller 30 or roller 40, never being able to pass through said opening without encountering one or the other of the two rollers 30, 40.

Preferably, the geometric plane P', on which the rotation axes I' and I" lie, is inclined, with respect to a horizontal plane, by an angle between 12° and 90°.

The feeding system 10 also comprises a closure element 60, which is linearly movable on a geometric plane M tangent to the second roller 40 and intersecting the first roller 30. Preferably, the geometric plane M extends below the second roller 40.

In one or more preferred embodiments, such as the one illustrated, the closure element 60 consists of a plate or blade extending in the same geometric plane M, in which its movement occurs.

The closure element 60 is movable between an open position where it is spaced from the first roller 30, thus allowing the dispensing of the dough through the passage K, and a closed position where the closure element 60 is placed in abutment against the first roller 30, thereby blocking the flow of the dough.

In this regard, it can be noted how the flow of the dough is stopped by the portion of the closure element 60 comprised between its point of contact with the first roller 30 and its point of contact with the second roller 40.

Preferably, the closure element 60 includes an end edge 62, facing towards the roller 30, which is capable of cutting the dough so as to separate the quantity of dough dispensed through the passage K, from the dough content present in the hopper 20, as a result of the movement of the closure element 60 from the open position to the closed position.

The movement of the closure element 60 can be actuated by an actuator 62, for example a linear actuator.

In one or more preferred embodiments, such as the one illustrated, the two rollers 30, 40 can be independently actuated by respective actuators 32, 42. These may, for example, be two rotary electric motors.

In one or more preferred embodiments, such as the one illustrated, the feeding system 10 may comprise one or more sensors 70 for detecting the weight of the hopper 20, including the dough content.

The feeding system 10 also includes a control unit 100 configured to control the actuators 32, 42 of the two rollers 30, 40, and the actuator 62 of the closure element 60, based on the weight detected by the sensors 70 and a predefined quantity of dough to be dispensed.

The possibility given by the two actuators 32, 42, to move the two rollers 30, 40 in a differentiated manner, provides the advantages that will be discussed below.

In operation, the hopper 20 is loaded with the food dough to be dispensed.

Through the sensors 70, the control unit 100 is able to detect the overall weight of the dough loaded into the hopper 20. In this regard, the expert in the field will understand that the control unit 10 can determine such weight measurement by taring the empty hopper 20.

Following the receipt of data indicative of a predefined quantity of dough to be dispensed, the control unit 100 commands the actuator 62 to bring the closure element 60 into its open position, and concurrently commands the two actuators 32, 42 to rotate the two rollers 30, 40.

Referring to figure 1, it can now be observed that, thanks to their particular configuration described above, roller 30 and roller 40 have the ability to vertically retain the dough located adjacent to and at the dispensing passage K; as seen above, any vertical axis passing through the lower opening 20B of the hopper 20 inevitably intersects one of the two rollers.

This ensures that the two rollers 30 and 40 can effectively control, through their rotational movement, the flow of dough through the dispensing passage K, along the inclined dispensing direction K'.

Referring to the prior art solution of Figure 2, it can instead be observed that once the closure element 6 is brought into the open position, the dough is substantially free to fall between the two rollers 2 and 4, which can act on the dough to regulate its outflow from the hopper, in a very limited manner.

Conversely, when the dough has a high water content, the effect of their rotation on the outflow of the dough is minimal.

Returning to the feeding system 10 described herein, the rotation speeds of the two rollers 30, 40 can be adjusted to increase or decrease the flow rate of the dough exiting through the dispensing passage K.

The rotation speed of the second roller 40 can be adjusted to be lower than the rotation speed of the first roller 30, or even in the opposite direction, to decrease the flow rate of the dough.

In an application, the two rollers 30, 40 can instead be rotated, both in a direction of rotation that determines a braking action on the dough in the direction opposite to the dispensing direction of the dough (in the example of figure 1, clockwise for roller 40, and counterclockwise for roller 30), thus reducing the flow rate of dough dispensed through the dispensing passage K.

The closure element 60 is commanded through the actuator 62 to open and close the passage K according to predetermined opening and closing times based on the weight detected by the sensors 70 and the predefined quantity of dough to be dispensed.

Of course, while the principle of the invention remains unchanged, the details of implementation and the embodiments may vary, even significantly, with respect to what is illustrated here by way of non-limiting example, without departing from the scope of the invention, as defined by the attached claims.

In this regard, in some applications, particularly for use with plastic, rigid, or crumbly doughs, the feeding system may omit the closure element 60 described above, and the control over the dispensing of the dough through the passage K is thus realized through the sole two rollers 30, 40.

## Claims

1. Feeding system (10) for supplying dough portions, in particular dough for food products,
said system comprising:
- a hopper (20) comprising an internal space (S) for receiving the dough;
- a sensor (70) for measuring the weight of the dough contained in the hopper (20);
- a first roller and a second roller (30, 40), rotatable and opposed, which are arranged below a lower opening of the hopper (20) and define between them a dispensing passage (K) for dispensing the dough contained in the hopper (20);
said system being **characterized in that** said first roller (30) is positioned so that its rotation axis (I') is arranged vertically at a lower height compared to the rotation axis (I") of said second roller (40), said dispensing passage (K) defining a dough dispensing direction (K') inclined with respect to a vertical direction.

2. System according to claim 1, comprising a closure element (60) for closing said dispensing passage (K), which is linearly movable between an open position and a closed position, in said closed position said closure element (60) being placed in abutment against said first roller (30).

3. System according to claim 2, wherein said closure element (60) comprises a planar body lying on a geometric plane (M) intersecting said first roller (30), and tangent to said second roller (40), and is linearly movable on such plane (M).

4. System according to any of the preceding claims, comprising a first actuator (32) for actuating the rotation of said first roller (30), and a second actuator (42) for actuating the rotation of said second roller (40) .

5. System according to claim 4, wherein said control unit (100) is configured to establish a difference in speed between the rotation speed of said first roller (30) and the rotation speed of said second roller (40), based on said data indicative of a predefined quantity of dough to be dispensed and the weight detected by said sensor (70).

6. System according to any of the preceding claims, wherein the reciprocal arrangement of said first and second rollers (30, 40) is such that any vertical axis passing through the lower opening (20B) of the hopper (20) intersects either the first roller (30) or the second roller (40), and cannot pass through said opening without encountering one or the other of said first and second rollers (30, 40).

7. System according to any of the preceding claims, comprising a closure element (60) for closing said dispensing passage (K), which is linearly movable between an open position and a closed position.

8. System according to any of the preceding claims, comprising a control unit (100) for controlling said first and second rollers based on data indicative of a predefined quantity of dough to be dispensed and the weight detected by said sensor (70).

9. System according to claim 8, when dependent on claim 7, wherein said control unit (100) is configured to control said first and second rollers and said closure element based on data indicative of a predefined quantity of dough to be dispensed and the weight detected by said sensor (70).

10. Method for supplying dough portions through a feeding system (10) according to any one of the preceding claims, comprising the steps of:
- loading the dough into the internal space (S) of the hopper (20);
- through at least said first roller (30), vertically retaining the dough located adjacent to and at said dispensing passage (K), and rotating said first and second rollers (30, 40) to dispense the dough through said dispensing passage (K), along said inclined dispensing direction (K').

11. Method according to claim 10, comprising establishing a difference in speed between the rotation speed of said first roller (30) and the rotation speed of said second roller (40), based on data indicative of a predefined quantity of dough to be dispensed and the weight detected by said sensor (70).

12. Method according to claim 10 or 11, comprising separating a dispensed portion of dough from the dough contained in said hopper (20), as a result of the actuation of said closure element (60) from said open position to said closed position.

13. Method according to claim 10, comprising rotating said first and second rollers (30, 40) in a direction of rotation that determines a braking action on the dough in the direction opposite to the dough dispensing direction through said dispensing passage (K), thus reducing the flow rate of dough dispensed through said dispensing passage (K).
